(19) **Europäisches Patentamt**

**European Patent Office**

**Office européen des brevets**

(11) **EP 1 019 338 B1**

(12) **EUROPEAN PATENT SPECIFICATION**

(45) Date of publication and mention
of the grant of the patent:
**11.12.2002 Bulletin 2002/50**

(21) Application number: **98949983.5**

(22) Date of filing: **03.09.1998**

(51) Int Cl.$^7$: **C04B 35/573**, C09K 3/14

(86) International application number:
**PCT/EP98/05579**

(87) International publication number:
**WO 99/012867 (18.03.1999 Gazette 1999/11)**

(54) **A METHOD FOR PRODUCING ABRASIVE GRAINS AND THE ABRASIVE GRAINS PRODUCED BY THIS METHOD**

VERFAHREN ZUM HERSTELLEN VON SCHLEIFKÖRNERN UND NACH DIESEM VERFAHREN HERGESTELLTE SCHLEIFKÖRNER

PROCEDE SERVANT A PRODUIRE DES GRAINS ABRASIFS ET GRAINS ABRASIFS PRODUITS AU MOYEN DE CE PROCEDE

(84) Designated Contracting States:
**AT BE CH DE ES FR GB IE IT LI NL SE**

(30) Priority: **05.09.1997 RU 97115186**
**05.09.1997 RU 97115168**
**05.09.1997 RU 97115171**

(43) Date of publication of application:
**19.07.2000 Bulletin 2000/29**

(73) Proprietor: **Frenton Limited**
**Douglas IM1 1SQ, Isle of Man (GB)**

(72) Inventors:
• **GORDEEV, Sergey Konstantinovitch**
**St.Petersburg, 193076 (RU)**

• **ZHUKOV, Sergey Germanovitch**
**St.Petersburg, 196030 (RU)**
• **DANCHUKOVA, Lija Vladimirovna**
**St.Petersburg, 193231 (RU)**
• **EKSTRÖM, Thommy**
**S-113 35 Stockholm (SE)**

(74) Representative: **Hyltner, Jan-Olof**
**Albihns Stockholm AB,**
**Box 5581**
**114 85 Stockholm (SE)**

(56) References cited:
**EP-A- 0 010 257    EP-A- 0 012 966**
**EP-A- 0 061 605    FR-A- 1 577 639**
**US-A- 4 151 686**

Printed by Jouve, 75001 PARIS (FR)

## EP 1 019 338 B1

**Description**

TECHNICAL FIELD

The present invention refers to a method for producing abrasive grains and to the abrasive grains produced by this method.

BACKGROUND OF THE INVENTION

There is a general need of superhard materials for many different fields of application. The materials may be working on or being in contact with steel, non-iron metals, paper, polymers, concrete, stone, marble, soil, cemented carbide and grinding wheels of aluminium oxide, silicon carbide, diamond or cubic boron nitride etc.

Commonly synthetic diamond powders are produced having sizes less than 600 $\mu$m. For several fields of application, for instance drilling, grinding, machining of leather, rubber, wood, larger grains are needed. Grains comprising diamond can be produced from diamond composite materials comprising a diamond skeleton (self-bonded diamonds with a small amount of or no bonding material) or comprising diamond particles bonded by a matrix comprising ceramic phases produced by sintering diamond particles in the presence of such materials.

Large abrasive grains are produced from diamond composite materials like Ballas, Carbonado etc. with fine diamond particles. These materials are for example produced by sintering in high-pressure chambers, with subsequent crushing of the composite and classification of the abrasive grains.

Because of the diamond instability and tendency to graphitize, the heat treatment is done in conditions of diamond stability at high temperatures, 1300-1600°C, in high-pressure chambers with pressures of 30.000-60.000 atm (HP/HT).

The drawbacks of methods using high pressure and high temperature are that bodies of only relatively small size are produced. In addition the manufacturing technology is rather complex and requires special equipment. The efficiency is low regarding amount of products produced and the relative cost is high.

There are some patents describing the production of abrasive grains:

A method for producing diamond-containing abrasive grains is disclosed in the patent EPO 0,435,501. The method includes crushing of a diamond compact consisting of a diamond skeleton being 70-90 % by volume and silicon, silicon carbide and/or metal silicide preferably to small sized fragments of about 1,5 mm. The diamond compact is preferably made by sintering a mixture of diamond, silicon, silicon carbide and/or metal silicide in a high-pressure chamber. After crushing of the diamond compact the fragments may be sintered as they are in HP/HT conditions to give a hard product. Alternatively a metal or second phase may be included to the fragments to infiltrate the fragments during the sintering and compacting.

The abrasive grains produced by the method described above have insufficient strength due to a high content of diamond in the crushed compact. The initial diamond in the compact has been sintered to form a continuous skeleton. This skeleton is brittle (corresponding to the brittle diamond) therefore the grains should be brittle. The relatively small amounts of silicon and/or silicon carbide will not prevent crack growth throughout the skeleton. All this decreases the strength of the diamond grains, especially under dynamic loads. Furthermore, the compact is made with a high-pressure/high-temperature process.

US patent 4.224.380 describes the production of a compact of self-bonded abrasive particles (diamonds and/or CBN) with an interconnected network of pores dispersed throughout. The compact is produced by bonding a mass of abrasive particles into a self-bonded body through the use of a sintering aid material under high pressure and high temperature (HP/HT). The body includes said particles in a self-bonded form and said material infiltrated throughout the body. The body is then treated to remove the infiltrated material to thereby produce a compact consisting of the self-bonded abrasive particles.

The drawback of this method is the use of high pressure and high temperature.

Several patents reveal techniques to produce diamond abrasive grains without using high pressure and high temperature:

US patent 3.520.667 describes the production of silicon carbide coated diamond abrasive grains by suspending the diamond particles in a gaseous atmosphere comprising a volatile silicon compound and forming by thermal decomposition of the silicon compound a silicon carbide layer on the particles. The decomposition takes place preferably by forming a fluidised bed with diamonds suspended in a mixture of gases, which includes hydrogen and the volatilised silicon compound. The bed is heated to 1300-1500°C to cause decomposition of the silicon compound and the formation of the silicon carbide coating on the dispersed and suspended diamond particles.

Drawbacks with this method of producing grains is that the silicon carbide coated diamonds are individual particles and not bonded to each other into agglomerates, thereby reducing the size of the abrasive grit and the subsequent application field.

US patent 4,606,738 and EPO 0,061,605 describes composite abrasive particles comprising a core abrasive crystal (diamonds or CBN) and a silicon carbide coating on said core crystal. The abrasive particles are preferably made by infiltrating core crystals coated with non-diamond carbonaceous material with fluid silicon. Then the silicon is leached out from the produced mass of core crystals and matrix of silicon carbide and silicon. The resulting leached mass is sub-divided and the composite abrasive particles are recovered. Another disclosed embodiment is the aggregates of the composite abrasive particles that are interconnected by a matrix of silicon carbide, which has an open structure.

Drawbacks of the above described method is that the produced abrasive grains, i.e. diamond particles coated by silicon carbide, have sizes equivalent to the size of the initial diamond particles. Thus there is a limit for preparing large, cheap abrasive grains of sizes several times greater than that of initial diamond particules and greater than industrially produced diamond particles. Aggregates produced by the given method are porous and have not high strength, which limit their field of application.

EP-A-12 966, VS-A-4 151 686 and EP-A-10 257 disclose processes for manufacturing polycrystalline bodies comprising diamond particles in a matrix of silicone carbide and silicon, wherein the bodies are made individually in molds.

The object of the present invention is a method for producing diamond-silicon carbide-silicon abrasive grains having excellent properties in a simple and cost effective way and the abrasive grains produced thereby.

SUMMARY OF THE INVENTION

The object of the invention is accomplished by a method for producing abrasive grains having the features stated in Claim 1.

Preferred embodiments are stated in subclaims 2-16.

The present invention relates also to abrasive grains manufactured by the method described above, the grains having the features stated in Claim 17.

Preferred embodiments are stated in subclaims 18-23.

BRIEF DESCRIPTION OF THE DRAWING

The invention will now be described with reference to the enclosed Figures, of which,

Fig. 1 shows the schematic structure of a diamond containing grain produced by the present method, where «1» is diamond, «2» is silicon carbide and «3» is silicon.

Fig. 2 shows the preferred steps of the method according to the invention in a flowchart,

Fig. 3 shows the degree of graphitization versus the graphitization time at one specific temperature,

Fig. 4 a shows the relationship between the amount of carbon ($\alpha$ and $\gamma$) inserted into the body at different initial porosity $\varepsilon_0$ that meet the conditions of $\varphi_{Si} \geq 0$, in the final body

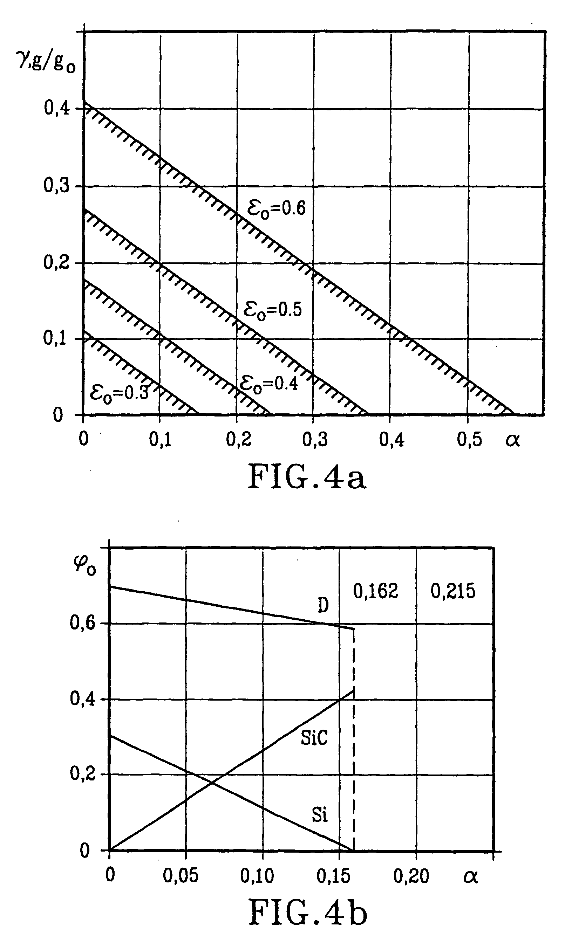

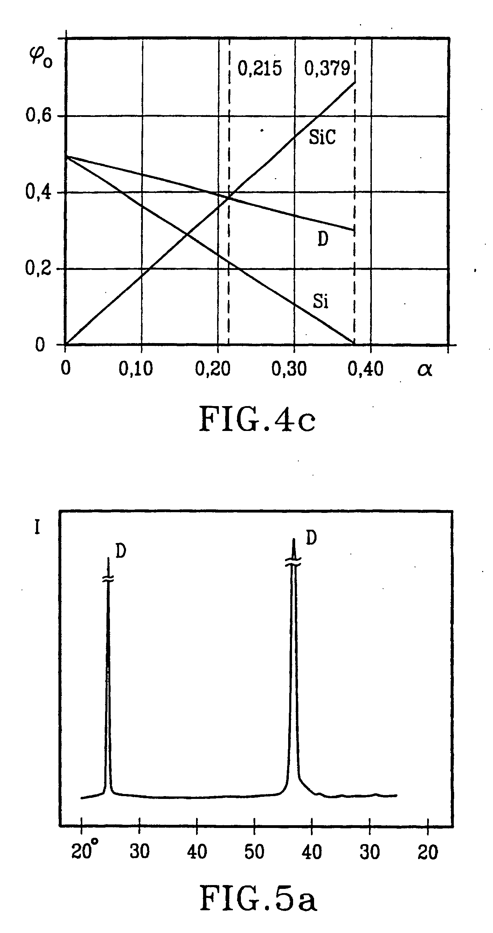

Fig. 4 b, c shows the relationship between the final body composition and diamond graphitization degree in the body, with initial work piece porosity $\varepsilon_0 = 0.3$ and $\varepsilon_0 = 0.5$, respectively, and

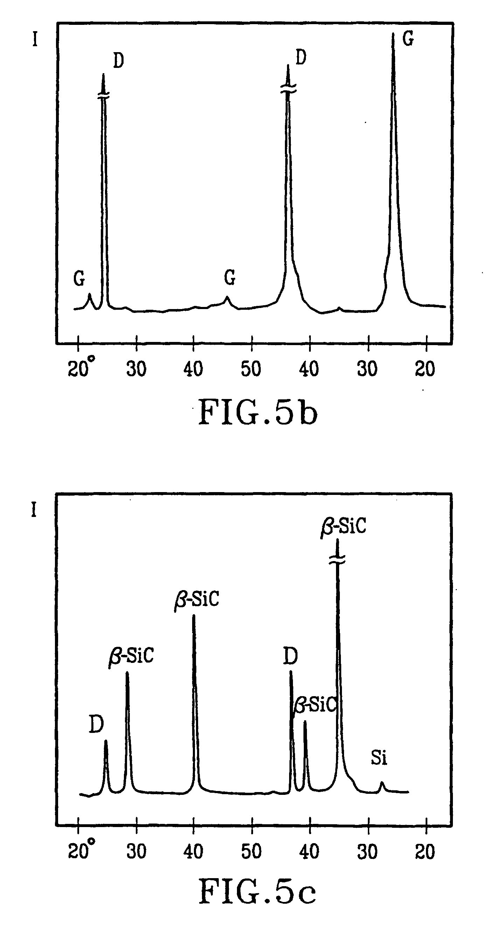

Fig. 5 a-c shows the results of X-ray diffraction analysis of a work piece, an intermediate body and the final body, respectively.

DESCRIPTION OF EMBODIMENTS OF THE INVENTION

The object of the present invention is to produce abrasive grains with improved properties. The technical result is obtained by production of grains of sizes exceeding 40 $\mu$m by crushing a composite material comprising separate diamond particles placed in a matrix formed by silicon carbide and silicon. Then the grains sizes are classified.

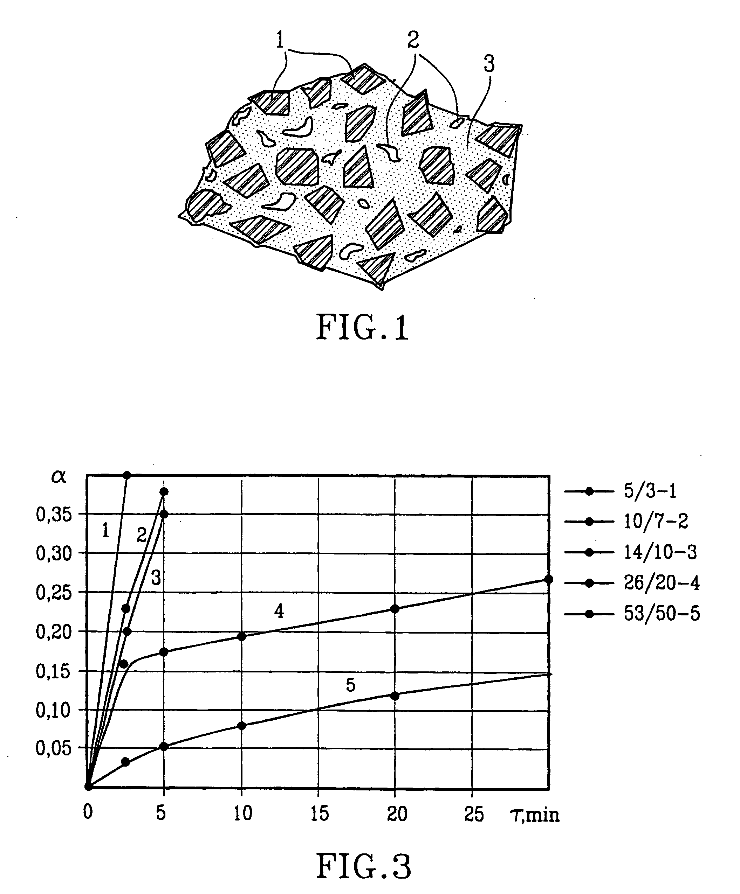

The schematic structure of a diamond containing grain produced by the claimed method is presented in Fig 1, where «1» is diamond, «2» is silicon carbide and «3» is silicon. As Fig 1 shows the claimed grains have not a continuous diamond skeleton as some of the earlier known materials. The separate diamond particles are bonded by a matrix of silicon carbide and silicon. This improves the breaking strength of the grains, especially under dynamic influences. At a crack development in the grain, the boundaries between diamond particles and the matrix will interfere the crack, thereby preventing a breakage. In diamond skeleton materials a crack development in the brittle diamond skeleton results in breakage of the whole grain. The fact that separate diamond particles are bonded by a matrix of silicon carbide and silicon which surrounds every diamond particle results in high thermal stability of the grains.

It is advantageous to leave the silicon in the polycrystalline body before the crushing step. The abrasive grain produced hereby includes diamonds bonded by silicon carbide and silicon. This makes possible to produce diamond grains of any size, and the size is only limited by the size of the polycrystalline body itself before the crushing. This is advantageous when producing large grains because there is no need to use large expensive diamonds for this.

The diamond containing composite used for production of grains by crushing comprises 20-70 vol.-% of diamond particles, 0.1-75 vol.-% of silicon carbide and 1-40 vol.-% of silicon and has a uniform structure due to the unique production method, which makes possible to unite diamond particles by a matrix of high rigidity and hardness with the diamond particles left intact.

The diamond composite used for crushing, is produced by forming a work-piece with porosity of 25-60 vol.-% from a mixture comprising diamond particles of sizes 3-500 μm, with a content greater than 95 vol.-% by well-known methods (pressing, slip casting, slurry casting etc.) with or without a binder, heat treating said work-piece in a medium of gaseous hydrocarbon(s) or in an inert medium (vacuum, inert gas) until the diamond content in the work-piece is reduced by no more than 50 wt-%, and subsequent infiltration of liquid silicon into the porous intermediate body. As a result a composite is produced, with predetermined shape and size.

The crushing of the composite is made by certain methods using certain equipment, for example, hydraulic press, metallic mortars, splined crusher, rotor crusher etc. The produced abrasive grains comprise diamond particles in a matrix of silicon carbide and silicon. The grains are ready to be used without additional machining as well as with ovalising the grains using standard methods, for example by a vortical ovaliser. The ovalised grains can be used in diamond pastes, diamond tools based on an organic matrix etc.

The optimum grain size is greater than 40 μm. The classification of grains smaller than 40 μm should be done by wet sieving or sedimentation instead of dry sieving, which is more expensive.

The properties of the abrasive grains depend on the composition and the size of the grains. In practice, composites of this type with a content of silicon less than 1 vol.-% and of silicon carbide less than 0.1 vol.-% are not produced. If the content of silicon carbide is greater than 75 vol.-% the abrasive properties of the grain decrease because of low diamond content. If the content of silicon is greater than 40 vol.-% the grains have low strength. Testing of grains produced by crushing of a polycrystalline composite body of the specified composition with diamond particles of sizes 3-500μm have shown good results.

The abrasive grains have a thermal stability factor less than 1.2, preferably less than 1.1, i.e. static strength of grains measured on standard method does not decrease more than 20%, (preferably 10%) after heat treatment at 1200°C in inert medium.

The composite polycrystalline body according to the present invention is achieved by a process that uses graphitization of diamond for production of diamond-silicon carbide-silicon abrasive grains. It is also possible to combine graphitization with pyrolytic deposition of carbon but not necessary. This signifies that the invention uses diamond graphitization, i.e. partial diamond transformation into graphite efficiently, and in a planned and controlled manner.

By submicron sized diamonds is meant diamond particles smaller than 1 μm and by small diamonds diamond particles smaller than 20 μm and more preferably smaller than 10 μm. Large sized diamonds, > 20 μm, and very large diamonds, > 60 μm, are also used, often in combination with small diamonds. In the process according to the present invention, diamonds of size 3-500 μm are preferably used.

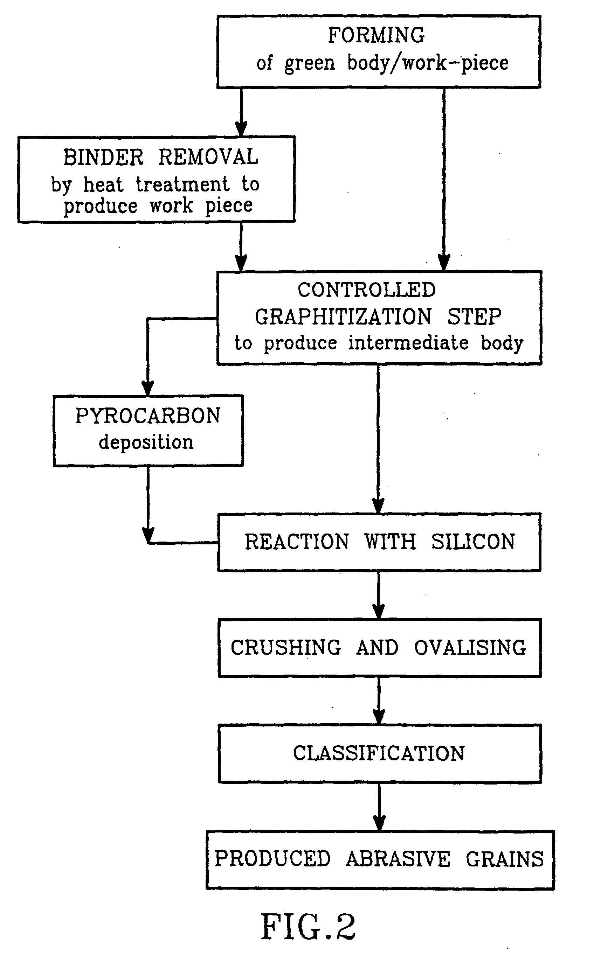

Figure 2 describes the preferred process steps in a flowchart. The different steps of the process according to the present invention are described by the following:

**Forming of a green body** is done from a mixture of diamond particles of various sizes together with a small amount of a temporary or permanent binder (up to 5 wt.-%), or without any binder. The forming is done using established techniques, for instance by pressing, using slip and slurry casting, injection moulding etc. In the case when a mould is used for forming, the green body is removed from the mould.

**Production of a work-niece** is done by evaporating or hardening and decomposing the present solution agents and/or binders in the green body. If a green body is produced without any binders it is considered as a work-piece. For provision of a uniform and controllable graphitization throughout the whole work-piece volume, it is undesirable to have impurities from the binder present therein. These may catalyse or inhibit the graphitization process. It is obvious that a reason for having not less than 95 wt.-% diamonds in the work-piece is that precise control of the amount of carbon that will be present and where, is only possible in a body without fillers and other additional materials.

**Heat treatment of a work-piece for obtaining an intermediate body**

The work-piece with a diamond content of 95-100 weight-% of the total mass is heat treated to obtain an intermediate body, by using controlled graphitization of diamond, or a combination of controlled graphitization of diamond and deposition of pyrolytic carbon, hereby referred to pyrocarbon. When combined, it is preferred to use graphitization prior to pyrocarbon deposition.

**Graphitization for obtaining an intermediate body**

During graphitization the work-piece (or the intermediate body with deposited pyrocarbon) is heat treated in vacuum or in a controlled atmosphere, preferably an inert gas at 1000°-1900°C, preferably at 1200°-1700°C. Graphitization is negligible at temperatures lower than 1000°C. At temperatures higher than 1900°C the rate of graphitization is so high that it might be difficult to control with required precision, using low quality diamonds. The vacuum pressure is preferably lower than 1 mmHg. As inert gas nitrogen, argon, hydrogen or helium may be used, which provides for the absence of oxygen in the system. The inert gas pressure is not so important and is chosen according to applicability of the process, e.g. 760 mmHg.

**Pyrolytic deposition of carbon into the graphitized intermediate body**
During pyrolytic deposition of carbon into the graphitized intermediate body (or into the work-piece), the body is exposed to a gas of hydrocarbon or hydrocarbons at a temperature that exceeds the decomposition temperature for the current gas or gases, for example natural gas at T=750°-950°C, or gas containing acetylene, methane, ethane, propane, pentane, hexane, benzene and their derivatives at T=510°-1200°C.

**The infiltration of silicon into the intermediate body** is carried out by well-known methods. The infiltration may preferably be done outside of a mould for instance by melting solid silicon or by liquid silicon feeding on an outer surface of an intermediate body, by using differential vacuum infiltration techniques or by dipping the intermediate body into liquid silicon. There is also a possibility to apply the silicon by infiltration of vaporous silicon or by the chemical methods, for instance by using techniques similar to sol-gel, chemical vapour deposition etc., followed by a high temperature reaction.

During the infiltration the chemical reaction of non-diamond carbon and silicon takes place resulting in the formation of silicon carbide, which together with eventual free silicon forms the matrix of the produced composite material body.

**Crushing of the infiltrated body and classification of the produced abrasive grains**
The crushing of the infiltrated body is made by using certain equipment, e.g. hydraulic press, metallic mortars, splined crushers, rotor crushers etc. The produced abrasive grains comprise diamond particles in a matrix of silicon carbide and silicon. Sometimes the matrix also comprises small diamond particles.

The crushing is carried out in different steps. A first coarse crushing is made followed by selective crushing with subsequent classification, screening of grains of certain sizes, using standard screen set. Sometimes the grains are ovalised, round off, by a vortical ovaliser; a mixture of ferromagnetic particles and the crushed grains are rotated by a magnetic field with a rotation frequency 3000 rpm. A final screening is then made.

The produced grains are ready to use without additional machining as well as with ovalising using standard methods for example, by vortical ovaliser. The ovalised grains can be used in diamond pastes, diamond tools based on an organic matrix etc.

The optimum grain size is greater than 40 μm. The classification of grains smaller than 40 μm must be done by more expensive techniques.

**Specifics about formation of carbon**

Non-diamond carbon in the body may be achieved by the following different ways

1. Graphitization by heat treatment of the diamond particles in the work-piece to transform the surface layer of diamond to graphite.
2. Deposition of pyrolytic carbon into the body.
3. During the heat treatment for the silicon infiltration additional graphitization is made.
4. Eventual residual pyrolytic carbon from binders.

The determination of contributions to total amount of non-diamond carbon is made by

a) establishing the eventually used amount of pyrocarbon.
b) establishing the degree of graphitization during the heat treatment for the silicon infiltration.
c) establishing the amount of any residual pyrolytic carbon from binders.
d) primary graphitization makes up the additional carbon amount needed.

Thus one feature of this invention is the ability to govern and vary the degree of diamond graphitization by simultaneous control of process and material parameters such as shape of the time-temperature curve, i.e. temperatures, holding times and heating rates, size, type and quality of and impurities in the diamond particles, the atmosphere and the pressure. Control considerations include e.g.

1. The relative volume of silicon or alternatively residual pores, silicon carbide and diamond in the final body depend upon the degree of graphitization which consequently has to be executed with precise control.
2. For submicron and small diamond particles it is important that the graphitization does not go so far that the particles disappear. The graphitization should be less than 50 wt-% and preferably lie between 6-30 wt-%.
3. When mixing small diamond particles with large particles, the size of the small particles must be carefully chosen so that the small particles will not disappear, unless so desired, and the large particles will be sufficiently graphitized. The graphitization should be less than 50 wt-% and preferably lie between 6-30 wt-%.

4. The predominant method of governing the degree of graphitization is to choose the right shape of the temperature-time curve from about 1200° up to about 1700°C, in vacuum or in inert gas at atmospheric pressure, as a function of diamond particle size and quality.

5. For different desired degrees of graphitization, suitable for materials aimed at different technological applications, different shapes for these curves have to be chosen.

6. By choosing the correct heat treatment, it is possible to achieve a final body with very low porosity, no graphite and a well-balanced composition between diamond, silicon carbide and silicon. If the graphitization degree is low the final composite will contain a larger amount of silicon or porosity. The higher the degree of graphitization, the more silicon carbide the final body will contain.

An increase of the temperature and holding time increases in general the amount of graphite produced. The velocity of the graphitization front movement from the surface of a diamond particle into the diamond particle is determined also by the crystallographic direction and amount of material impurities and defects. When all other conditions are the same, the velocity of the graphitization front propagation will be the same for large and small diamond particles. However, the difference in particle size determines different relative graphitization degrees for large and small particles. The degree is significantly higher for small particles and is proportional to the specific area of the diamond. Thus it is important to choose optimal conditions of the heat-treatment in order to control the production of a material by the proposed method and it is of particular importance when using small diamond particles.

For small particles it is very important to accelerate the heating rate in the temperature area greater than 1200°, because the graphitization rate depends strongly on the temperature. Thereby the graphitization decreases (compared to slower heating to the same temperatures) and the degree of graphitization does not exceed the desired limit ($\leq$ 50 wt.-%). This makes subsequent liquid silicon infiltrating of the intermediate body possible. Silicon infiltration throughout the body will not occur unless pores of sufficient size exist throughout the body. The process of graphitization is delicate to control and realise. It must be adjusted to the equipment and material that is used. Some of these parameters have to be empirically related to match the equipment and materials that are used.

Figure 3 shows the degree of graphitization, $\alpha$, versus the graphitization time, $\tau$, at one specific temperature. As can be seen the degree of graphitization increases more rapidly for small diamond particles (5/3, 10/7 and 14/10 $\mu$m) compared to larger particles (28/20 and 63/50). The larger the size is, the slower the relative graphitization rate increases.

One of the advantages with the graphitization process is the improvement of the diamond surface.

Generally the cost of diamonds is related to the quality and size. It is well known that the surface layer of most diamond particles has a great number of defects. Defects and impurities on the surface will reduce mechanical and chemical stability. It is desired not to have surface defects and impurities while still not using expensive, high quality diamonds. This is achieved by intentionally transforming the surface layer of the diamond to graphite by heat treatment. The graphitization starts on the surface, gradually propagating deeper into the particle. Furthermore not only the diamond surface may be improved by diamond graphitization but also the bulk properties. Diffusion processes start in the diamond when it is heated. By this diffusion process metallic and other impurities are moved to the surface of diamond and embedded in the silicon carbide or silicon. As the graphitization transforms the defective layer on the diamond surface it will result in improvement of the total particle properties and as a consequence, of the whole composite material. To achieve these improvements the graphite layer surrounding the diamond particle should be at least 50 nm, preferably thicker than 200 nm. The graphitization should not be less than 1 wt-% and preferably be at least 6 wt-%.

Another very important achievement of the diamond graphitization is the extremely strong bond of the formed SiC, coating each individual diamond particle. The diamond will be bonded to the matrix and in a demanding application it will not be pulled out.

During the total manufacturing process leading to a dense or near dense body with no graphite, certain rules must be obeyed:

The porosity of the materials consists of pores of different size; larger pores and smaller pores.

The work-pieces have a certain volume percentage of porosity and certain pore sizes before the heat treatment and the silicon infiltration, determined by the diamond particle size and size distribution, by other materials that are present or added and eventual compacting of the green bodies. The diamond content is decreasing corresponding to the amount of graphite that is formed during the graphitization of diamonds. The total amount of non-diamond carbon in the body, including added pyrocarbon or from possible residual of binder, must be controlled in order to achieve final material with an optimum content of silicon carbide (produced in the reaction between the non-diamond carbon and the silicon) relative to elemental silicon, the elemental silicon filling up the porosity creating a dense or near dense body.

The initial porosity and degree of graphitization influence the properties of the final material. At a work-piece porosity of greater than 60 vol.- %, the strength of the work-piece is insufficient for realisation of the subsequent steps of the process. When the porosity of a work-piece is less than 25 vol.-%, it is difficult to infiltrate silicon into the intermediate body, and the final body will have significant residual porosity. The same problems appear if the graphitization degree is more than 50 wt-% or if the amount of deposited pyrocarbon and residual carbon from binders is more than 25 wt-%, because the limiting small pores will not be sufficiently large (due to too thick carbon layers). In such cases during silicon infiltration, a dense layer of silicon carbide is formed in the surface zone of the intermediate body, which blocks the penetration of liquid silicon into internal parts of said intermediate body.

For a given initial porosity of the work-piece $\varepsilon_0$, the maximum amount of carbon, prepared by graphitization, deposition of pyrocarbon and any possible residual pyrolytic carbon from binders, that at a later processing step will allow reaction between all of the carbon with infiltrated silicon to form silicon carbide, is illustrated in figure 4a. The relative amounts of graphite ($\alpha$) and pyrocarbon plus residual carbon from binders ($\gamma$) for any acceptable combination hereof are also distinguishable from this figure. The process is limited by the total amount of carbon related to the porosity. At a certain initial porosity, the final composite will contain a large amount of silicon if the amount of carbon is too small. If the amount of carbon is too large, certain amounts of residual carbon will be left in the final composite, which is undesired because the carbon acts like defects in the material. See also the two graphs, fig.4b and fig.4c that shows the relationship between the graphitization degree for a certain initial porosity and the composition of the final composite. As can be seen the variation of the diamond, silicon carbide and silicon components is linear. As the graphitization degree increases, the carbon content increases while the diamond and silicon contents decrease.

These figures have been produced by using these following equations under the conditions that the total body volume does not change and that there are no pores in the produced body:

The volume content of diamond in the final material is:

$$\varphi_D = (1-\varepsilon_0)(1-\alpha) \qquad\qquad \text{[eq. 1]}$$

where $\alpha$ is the graphitization degree, i.e. amount of graphite, $\varepsilon_0$ is the initial porosity of the work-piece.
The volume content of silicon carbide in the final material is determined by the amount of carbon that has reacted with silicon:

$$\varphi_{SiC} = (1-\varepsilon_0)(\gamma+\alpha)\, \rho_D M_{SiC}\,/\,(\rho_{SiC} M_C) \qquad\qquad \text{[eq. 2]}$$

where $\rho_D$ and $\rho_{SiC}$ are the densities of diamond and silicon carbide, $M_{SiC}$ and $M_C$ are the molecular masses of silicon carbide and carbon.

The volume content of silicon in the final material is:

$$\varphi_{Si} = 1-(\varphi_{SiC} + \varphi_D) \qquad\qquad \text{[eq. 3]}$$

To perform the production of non-porous material it is necessary to meet the condition of $\varphi_{Si} \geq 0$. This condition is fulfilled by the values of $\alpha$ and $\gamma$ falling into the areas shown in fig.3a. Therefore the amount of pyrocarbon and binder residues that may be inserted to meet the condition of $\varphi_{Si} \geq 0$ in the final material depends to a large extent on the graphitization degree.
The solutions of equations 1, 2 and 3 at $\gamma=0$ gives the relationship between the diamond composite composition and initial porosity of the work-piece according to fig.3b-c.

Figure 5 shows the results of phase X-ray diffraction analysis of samples made according to this process. It is obvious from Fig.5a that the initial work-piece formed of diamond powder contains a diamond phase (marked with "D"). Subsequent heat treatment of the work-piece to obtain an intermediate body results in formation of a graphite phase in it, as can be seen in Fig.5b (marked with "G"). In the subsequent silicon infiltration of the intermediate body, the silicon reacts with graphite and produces silicon carbide. Fig.5c shows that the graphite is absent in the final product and that diamond, silicon carbide (marked with "SiC") and silicon (marked with "Si") is present.

USE OF PARAMETER VARIATIONS OF DIFFERENT KIND

Parameter variations may be applied to the material during various processing steps to control both final properties of the product and the manufacturing cost. Different combinations of parameter variations may be applied. The applied parameters are:

-   diamond particle size
-   diamond quality
-   diamond bonding
-   amount of silicon carbide and silicon

Some of these parameters are dependent on each other. In the following examples of controlling the final properties by the use of parameter variations and combinations thereof will be shown.

**Variation of the diamond particle size; Combination of diamonds of different sizes**

The material according to the present invention may include not only one but several sizes of diamond particles. The use of diamonds of several sizes in the material gives it special characteristics. Large diamond particles provide the material with good abrasive properties (hereby referred to abrasive, wearing, cutting and other mechanical material removing properties). However, lower relative wear resistance of the SiC/Si matrix may lead to debonding, loss of these large diamonds from the matrix, especially under severe operational conditions thereby decreasing the lifetime of a composite tool.
By combining large diamond particles with small in a homogenous mixture, the lifetime of the tools will increase due to an increased wear resistance of the formed new matrix. Small diamond particles reinforce the composite. Being distributed throughout the whole SiC-Si matrix, small diamond particles increase the Young's modulus, the thermal conductivity, the hardness, the wear resistance etc. For instance, when about 40 vol.-% of diamond particles with a size of about 10 μm are included in the SiC-Si matrix, the Young's modulus will increase from 400 to 650 GPa and the thermal conductivity will increase from 80 to 250 W/mK, if compared to a SiC-Si matrix without diamonds. So, the use of small diamonds together with large gives not only enhanced material properties but also is more economical than only to use large.

**Variations of the diamond quality**

Diamonds of high quality are generally more expensive than diamonds of lower quality. The term quality is understood as something that varies with the following parameters; mechanical and optical properties, if it is well crystallised or not, defects like inclusions and cracks (mostly in the surface), shape, if they are synthetic or natural etc.
The material according to this invention may be produced by using a combination of cheaper diamonds of lower quality and good quality diamonds in order to vary the composition of the material. Some low quality diamonds are graphitizised faster than diamonds of better quality thereby giving a larger amount of graphite, and thereby a larger amount of silicon carbide produced in the subsequent infiltration step. Additionally graphitization will improve the surface of diamonds of lower surface quality.

**Variations of the bonding of large diamonds**

Our process allows adjustment of the material to different fields of application by optimising the performance of the composite abrasive grains for each field. Due to its superior hardness, diamond is the component in the composite that is used for the main part of the work effort, therefore this adjustment may be done by altering the diamond parameters; type, particle size and concentration.
There are several types of diamond particles; from well crystallised blocky single crystals with sharp cutting edges to types consisting of different diamond layers on top of each other, e.g. onion-shaped, where each layer has cutting edges. The latter type is sometimes referred to as friable. These two types have significantly different properties and between these extremes there are a large variety of diamond types.
In other materials, for instance when used for grinding wheels, it is known that the chosen diamond type has a great influence on the properties of the grinding wheel. To adjust the properties in a proper way it is however necessary to adjust the bonding force of the diamonds to the diamond type used. In known grinding wheel materials it is difficult to achieve such detailed adjustment of the bond needed for optimal performance. Principally three different types of by bonds are used for grinding wheels; resin bond, metal bond and vitreous bond.
By the method according to the invention there are good possibilities to make an adjustment of bond of larger

diamonds (>20μm) and properties of the bonding matrix (here consisting of small diamonds, silicon carbide and silicon). A suitable hardness of the matrix can be chosen varying the concentration of small diamonds of size < 20 μm, (20-70 vol.-%); silicon carbide (0.1-75 vol.-%) and silicon (1-40 vol.-%) and thereby also the wear resistance of the matrix and the subsequent bond of the larger diamond particles.

It is possible to choose the hardness of the matrix within a range about 20-63 GPa by varying the composition of the matrix; hardness of diamond is about 100 GPa, of silicon carbide about 25 GPa and of silicon much less than 10 GPa. By this kind of adjustment the performance of our improved material is optimised for various applications.

A matrix hardness of 20-30 GPa is preferable for diamond types requiring a relatively weak bond; 50-63 GPa for diamond types that need a strong bond; and a hardness of 30-50 GPa for diamond types or mixtures requiring intermediate bonding strength.

### Variation of the amounts of silicon carbide and/or silicon

The silicon carbide and silicon matrix is tightly bonded to the diamond particles providing excellent properties of the material according to the present invention. Furthermore the silicon carbide content is important for the properties of the material, affecting for instance the hardness and the bonding of diamonds. The amount of silicon will also affect the properties - increased silicon content will lower the hardness and wear resistance. Other properties that are affected by the composition is for instance thermal conductivity increasing with the diamond content, electrical conductivity increasing with the silicon content etc.

The diamond containing composite used for production of grains by crushing comprises 20-70 vol.-% of diamond particles, 0.1-75 vol.-% of silicon carbide and 1-40 vol.-% of silicon and has a uniform structure due to the unique production method. In practice, composites of this type with a content of silicon less than 1 vol.-% and of silicon carbide less than 0.1 vol.-% are not produced. If the content of silicon carbide is greater than 75 vol.-% the abrasive properties of the grain decrease because of low diamond content. If the content of silicon is greater than 40 vol.-% the grains have low strength.

Therefore a well-balanced composition between the diamond, silicon carbide and silicon is desired. This balance in composition depends on the intended specific application for the material. By varying the composition it is possible to control the properties and thereby adjust them for the specific application. The way to vary the content of silicon and silicon carbide in the final body is to alter the amount of non-diamond carbon in relation to available porosity. This is done by altering the conditions of the heat treatment giving different amount of graphite formed and pyrocarbon added, by different amounts of non-diamond carbon left from binder residues, by diamond size/pore size variations etc.

After crushing a final body with a certain content of diamond particles, silicon carbide and silicon, the individual grains obtained will typically not have the same content of diamond, silicone carbide and silicon as that body. However, the mean value content of the grains, i.e. the content of diamond, silicone carbide and silicon in any appreciable amount of such grains, will correspond to the content in this final body.

### ADVANTAGES WITH THE PROCESS AND MATERIAL ACCORDING TO THE PRESENT INVENTION

One of the great advantages of the present invention is that the process parameters can be varied to accomplish the desired diamond graphitization in the work-piece to provide optimal conditions for the production of a polycrystalline abrasive grains, having desired strength, physical and mechanical properties.

In comparison with methods where carbon-coated or non-coated diamonds are mixed with carbonaceous materials for production of diamond-silicon carbide-silicon composites, the proposed method using graphitization and possible pyrocarbon deposition, has several advantages:

1) During diamond graphitization the graphite is formed directly on the surface of all diamond particles and during possible deposition of pyrocarbon directly on graphitizised diamonds. Therefore carbon is tightly in contact with the surface. Thus, the critical small pores between particles remain free for subsequent silicon infiltration of the intermediate body. Smaller particles of carbon black or carbon fibres etc. are placed between the diamonds when using known techniques of mixing carbonaceous materials with diamond particles. These smaller particles may agglomerate in the narrowed pores, thus making the pore sizes even smaller, which may affect the silicon-infiltration negatively.

2) The distribution of carbon is important for the properties of the final material. The carbon layer is in tight contact with the diamond surface by the diamond transformation into graphite and by possible deposition of pyrocarbon onto the body. This tight contact guarantees the formation of silicon carbide directly on the surface of the diamond particles thus forming a diamond-matrix interface of high adhesion i.e. the diamonds are tightly bonded to the silicon carbide-silicon matrix. The properties are improved due to the high adhesion of both small and large diamonds. The diamonds will not chip out from the matrix so easily while used in different applications. The material is extremely wear resistant. When using in operations requiring very strong bonding, the large diamond particles will be used totally in the process, while in traditional abrasive materials (with metallic or organic bonds) the diamonds are only used to about 50 vol.-% before falling out from the matrix.

3) Heat treatment of the eventual binder and graphitization can be accomplished using the same equipment as for silicon infiltration (when pyrocarbon deposition is not used). Thus these process steps can be realised step by step in the same furnace resulting in decreased overall time for producing the final material.

4) The graphitization of diamond starts on the surface of the diamond particles, gradually propagating deeper into the particle. The graphitization transforms the defective layer on the diamond surface, resulting in improvement of the particle properties and as a consequence, of the whole composite material for instance regarding the thermal stability. This allows the use of relatively low cost diamonds.

5) In the present invention, graphitization of diamond with or without deposited pyrocarbon avoids the various problems associated with physically mixing in carbonaceous materials as the source of carbon. These problems include non-uniform distribution of carbon, incomplete reaction with silicon, blocking of pores and inhomogeneities due to different size, shape and density of the mixed materials.

6) The graphitization will provide for fast and proper carbon formation in the whole body volume, starting from the surface of the diamond, expanding linearly. Only a relatively small amount of diamond is transformed. Thus when producing very thick and large bodies, the graphitization is advantageous due to the ability to form carbon even in deeper parts of the body without risk of blocking the pores for the subsequent infiltration.

7) By using earlier known methods the forming of green bodies of a carbon-coated or non-coated diamonds mixed with carbonaceous materials, is done in a temporary mould or same mould as the evaporation/decomposition of binders and silicon infiltration. A relatively large quantity of binders might be required for this forming, especially when using large diamond particles. The productive efficiency is decreased by requiring a mould for each green body when placed in a furnace. The consumption of moulds is high and the lifetime of the mould is decreased due to the high wear in the heat treatment processes. There might also be problems with the releasing of the composites from the moulds. Graphite moulds are commonly used and during the liquid silicon infiltration step some silicon may react with the graphite and thereby cause problems of releasing of the body from the mould. The process according to the present invention avoids the expensive use of mould during the heat treatment and silicon infiltration steps leading to cost advantages by not being restricted to the use of moulds.

8) The process according to the present invention gives significant cost advantages due to the fact that a great number of large bodies may be produced in one batch and the main method to produce carbon, graphitization of diamond, is a faster method than pyrocarbon and uses no gas. When no pyrocarbon is added the process is a "one step process" where the graphitization of diamond is performed during the temperature raise before the silicon infiltration. There is no need of using moulds than for, in some cases, forming. Diamonds with a relatively lower price may be used.

9) The method makes possible to produce diamond containing grains of large sizes having a wider technological use, which otherwise is expensive and scarce.

10) By using the present method for production of these grains it is possible to find a new qualified application for the very fine diamond types, which are relatively cheap and that are for the moment of pretty small economical use.

**The abrasive grains according to the present invention holds several advantages:**

The versatility of the process is unique. The process parameters can be varied to give the produced material desired properties. With this method it is possible to produce materials of good wear resistance and with improved performance for abrasive, grinding and other mechanical removing operations.

One feature of the invention is that the proposed material is characterised by the possibility to combine different excellent properties simultaneously and to match such properties that corresponds best to the various intended applications. Controllable properties are:

1) A high Young's modulus and sufficient strength in combination with low density.
2) High hardness and high bonding strength of the diamonds results in excellent abrasion and erosion wear resistance.
3) Adjustment of the hardness and the bonding strength of the matrix according to the type of the larger diamonds.
4) A high thermal conductivity, low thermal expansion coefficient, depending on the diamond content.
5) Maintenance of mechanical properties after exposure to temperatures up to $1500°$-$1600°$C.

When mixing together small and large diamond particles, two facts affect the material properties; the high adhesion between the diamond particles and the matrix, and the high wear resistance of the matrix due to small diamonds distributed therein. Large diamond particles will drop out from the material if the bond to the matrix is insufficient or the matrix has low wear resistance. Small diamond particles reinforce the matrix, giving it high wear resistance and increased rigidity, strength, and thermal conductivity. All this improves significantly the abrasive properties (wearing, cutting and other mechanical material removing properties) of the materials: increased thermal conductivity decreases the temperature in the working area of diamond composite abrasive grains.

## EXAMPLES OF METHOD REALISATION AND GRAIN PROPERTIES

The following different diamond types were used for preparation of samples, which were used for production of grains that were tested: ACM 5/3 synthetic diamond particles (size range 3-5 μm), ACM 10/7 synthetic diamond particles (size range 7-10 μm), ACM 14/10 synthetic diamond particles (size range 10-14 μm), ACM 28/20 synthetic diamond particles (size range 20-28 μm), ACM 40 synthetic diamond particles (with size smaller than 40 μm) and ACM 63/50 synthetic diamond particles (size range 50-63μm), all from Superhard Materials Institute, Kiev, Ukraine.

### Example 1:

Cylindrical samples ($\varnothing$ = 20mm, h = 3mm) was produced from diamond powder of ACM10/7 type. A mixture is made from the diamonds and a binder - 25 % alcohol solution of phenol formaldehyde resin. The amount of dry resin is 2 wt.-% from the mass of diamond powder. The mixture is stirred thoroughly and passed through a screen with a mesh size of 200 μm.
The forming of the samples is made by pressing using metallic moulds, at room temperature, pressing with a force of 45 kN. The green bodies are taken out of the mould and kept at room temperature in air for 10 hours with subsequent drying at 70°C for 1 hour and hardening at 150°C for 1 hour.
The produced work-pieces contain 98 wt.-% of diamond and have a porosity of 51 vol.- %.
Heat treatment of the work-pieces is done in vacuum (pressure 0.1 mmHg) at 1550°C for 3 min.
This decreases the diamond content in the intermediate bodies by 15 wt.-%.
Infiltration of the intermediate bodies is made by melting silicon on the surfaces of the intermediate bodies at 1550°C.
The produced polycrystalline bodies comprise 41 vol.-% diamond, 44 vol.-% silicon carbide and 15 vol.-% silicon and have a Young's modulus of 570 GPa.
The first coarse crushing of the samples was made by a hydraulic press with a force of 1.5 MN. The coarse crushing was followed by a selective crushing with a splined crusher. After the first crushing abrasive grains larger than 2500 μm was screened. After the second crushing grains larger than 2000 μm was screened. The crushing was followed by the step of screening classification, which is carried out using standard screen set.
Some of the grains were ovalised, round off, by a vortical ovaliser. A mixture of ferromagnetic particles and the crushed grains are rotated by a magnetic field with a rotation frequency 3000 rpm. A final screening is then made.
The static and dynamic strength of the ovalised and non-ovalised grains was measured (see table 1) and the temperature stability of the grains was measured, i.e. the strength after treatment in argon medium for 20 min at temperature 1200°C (see tables 2-3).
Abrasive grains with size 125/100 μm was used to produce abrasive pastes by the following:

The following components - 21g stearine, 0.4 g wax, 32.6g vaseline and 5g olein acid - were placed in a special vessel. The components were heated to 60-76°C by heating the vessel in a water bath until the mixture was totally molten and stirred. 40g of the abrasive grains was wetted in 10g olein acid and stirred while heating up to 40-50°C. Finally these two mixtures are mixed together and stirred.

The produced paste was tested by its abrasive ability. (See table 1)

### Example 2.

Cylindrical samples were produced from diamond powder of ACM-40 type (a homogeneous mixture of diamond with sizes of 1 to 40 μm) as in example 1. The produced samples comprise 43 vol.-% diamond, 39 vol.-% silicon carbide and 18 vol.-% silicon and the Young's modulus of the material is 560 GPa.
Ovalised and non-ovalised abrasive grains were produced according to the same methods as in example 1, as well as the abrasive paste. The abrasive grains and the paste were tested as in example 1. The test results are shown in Tables 1 - 3.

Table 1

| Sample | Initial diamond type | Abrasive grain size [μm] | Static strength of grains (N) | Dynamic Strength of grains | Abrasive Ability of the paste, (mg) |
|---|---|---|---|---|---|
| 1 | ACM 10/7 | 1000/800 (O) | - | 105 | - |
| 2 | | 1000/800 | - | 98 | - |
| 3 | | 500/400 (O) | 111,85 | 58 | - |
| 4 | | 500/400 | 102,37 | 42 | - |
| 5 | | 250/200 (O) | 19,0 | - | - |
| 6 | | 250/200 | 16,9 | - | - |
| 7 | | 160/125 (O) | - | 67 | - |
| 8 | | 160/125 | - | 60 | - |
| 9 | | 125/100 (O) | 8,24 | - | - |
| 10 | | 125/100 | 6,03 | - | 207 |
| 11 | ACM <40 | 500/400 (O) | 114,35 | 62 | - |
| 12 | | 500/400 | 105,81 | 44 | - |
| | | | | | |
| 13 | | 250/200 (O) | 15,2 | - | - |
| 14 | | 250/200 | 10,5 | - | - |
| 15 | | 160/125 (O) | - | 55 | - |
| 16 | | 160/125 | - | 49 | - |
| 17 | | 125/100 (O) | 6,1 | - | - |
| 18 | | 125/100 | 5,5 | - | 203 |
| Note: (O) stands for ovalised powder | | | | | |

Table 1 shows that the produced grains give high values of both static and dynamic strength. The grains are characterised by high resistance to dynamic influences. The dynamic strength increases with increasing abrasive grain size.

The static strength of ovalised grains of 500/400 class corresponds to high quality synthetic diamonds of AC65 type and the dynamic strength is greater than that for the best synthetic diamonds of FSU, diamonds of AC160 type according GOST requirement no 9206-80. (GOST requirement: The static strength of AC65 is 103 N. The dynamic strength of AC160 is 50.)

The abrasive ability of the paste comprising abrasive grains (measured as mass of grinded cemented carbide by 0.1 g of diamond contained past) complies the requirements placed by the GOST requirement no 255993-83 (the GOST requirement is 160 mg) to synthetic diamonds despite that the diamond content in the grains is less than 50 vol.-%

Table 2 -

| The temperature stability of the grains at static strength | | | | |
|---|---|---|---|---|
| Sample | Abrasive grain size (μm) | Static strength (N) | | Thermal stability factor, Kt |
| | | Before heat treatment | after heat treatment | |
| 1 | 2000/1600 | 398,57 | 374,68 | 1,060 |

Table 2 -   (continued)

| The temperature stability of the grains at static strength | | | | |
|---|---|---|---|---|
| Sample | Abrasive grain size (μm) | Static strength (N) | | Thermal stability factor, Kt |
| | | Before heat treatment | after heat treatment | |
| 2 | 1600/1250 | 289,75 | 262,65 | 1,100 |
| 3 | 1250/1000 | 244,36 | 241,51 | 1,010 |
| 4 | 1000/800 | 228,83 | 227,19 | 1,007 |
| 5 | 800/630 | 145,11 | 146,97 | 0,987 |
| 6 | 630/500 | 118,34 | 119,46 | 0,990 |

Table 3 -

| The temperature stability of the grains at dynamic strength | | | |
|---|---|---|---|
| Sample | Abrasive grain size (μm) | Dynamic Strength | |
| | | Before heat treatment | after heat treatment |
| 1 | 1250/1000 | 52 | 51 |
| 2 | 1000/800 | 43 | 42 |
| 3 | 800/630 | 35 | 35 |
| 4 | 630/500 | 51 | 49 |
| 5 | 500/400 | 53 | 55 |

Table 2 and 3, shows the static and dynamic strength of the grains after heat treatment, 20 minutes at 1200°C in inert medium, practically do not change. The thermal stability corresponds to that of natural diamond. Strength of synthetic diamond under same test conditions decreases with a factor ranging from 2.5 till 5.0 and greater, see "Physical properties of diamond: Handbook", Kiev 1987, p 67.

**Example 3.**

Two bowl face grinding wheels of the type 12A2-45[1] (dimensions 125x10x3x32) with conventional concentration of abrasive 100 %, i.e. abrasive grains occupy 25 vol.-% in the wheel were produced on the base of grains prepared in example 2. For the production of the wheels grains of size range 160/125 μm and an organic bond B2-01 (Superhard Materials Institute, Kiev, Ukraine) were used.

The wheels were tested for grinding of sintered alloy T15K6 (79 % WC, 15 % TiC, 6 % Co) (cemented carbide) and steel P18 (0.7-0.8% C, 17-18.5% W, 0.5-1.0 % Mo, 3.8-4,4 % Cr, 1-1.4 % V). The test results are shown in Table 4.

The testing conditions: V = 20 m/sec (rotation velocity), $S_{lengthwise}$=2,0 mm/min (lengthwise supply), $\delta_{cross}$ = 0,02 mm (cross supply for double run).

Table 4

| Parameters | Sintered alloy T15K6 | Steel P18 |
|---|---|---|
| Relative consumption of wheel | 1,2 - 1,6 mg/g | 0,7 mg/g |

Table 4   (continued)

| Parameters | Sintered alloy T15K6 | Steel P18 |
| --- | --- | --- |
| Surface roughness after machining | 1,25 µm | 0,8 - 1 µm |
| Power of grinding | 1.5 - 2,0 kW | 1,7 - 2,0 kW |

**Conclusions from the examples:**

1. The produced grains of the diamond-silicon carbide-silicon material have excellent values of both static and dynamic strength, which make them comparable with high-quality synthetic diamonds.

2. The produced grains keep their strength after heat treatment at 1200°C. These properties measure up to those of natural diamonds and are 2-5 times greater compared to synthetic diamonds.

3. The produced diamond grains have high abrasive ability that is on a par with that of synthetic diamond particles. Note that a content of diamond particles in the produced grains is about 50 vol.-%, i.e. to achieve the same abrasive ability less diamond is needed, hence economy of diamond.

4. The grains can be used for production of different types of diamond tools, such as diamond wheels, diamond pastes, etc. In this case production methods and equipment are the same as those used for production of goods from synthetic diamonds.

5. Test results have shown that diamond tools made of the grains can be applied not only for machining of sintered alloys and other similar materials, but also of iron based alloys. Thereby, using the produced grains it is possible to manufacture a combined tool, which has a wider field of application.

**METHOD SPECIFICATIONS**

The properties of the claimed material have been determined by the following methods.

1. The static compression strength of grinding grains is determined by continuously measuring the breaking load resulting in breaking of a certain amount of grains:

The grains are placed between two parallel corundum plates and subjected to single-axial compression with a smooth increase of the force. Static strength of the grinding grains was determined by sequential crushing of 50 grains. The breaking loads were calculated as follows:

$$P = \frac{\sum_{1}^{50} P - \sum_{1}^{n} P}{50 - n},$$

where

n- quantity of grains, which were broken under load greater than $2P_{med}$
$P_{med}$ - medium strength of 50 grains.

2. Thermal resistance of grinding grains, (thermal resistance factor $K_t$), is determined by the following ratio:

$$K_t = P_1/P_2,$$

where

$P_1$ - static compression strength of powders before heat treatment
$P_2$ - static compression strength of powders after heat treatment

The heat treatment is carried out at 1200°C in a medium of inert gas (Argon) for 20 minutes.

3. Dynamic strength is determined using device of Fritester type. The powder sample (grains) is placed in a cylindrical steel vessel with a steel ball that is freely moving along the vessel axis. The vessel is fixed in a machine, which provides it with a vibrating reciprocating motion along its axis. The quantity of load cycles is registered. The powder strength (index by Fritester) is determined by quantity of load cycles, which are necessary for breaking of 50 weight-% of the grains of initial probe. Dynamic strength is calculated as an arithmetic mean after test of three samples of 2±0.2 carat.

## Claims

1. A method for producing abrasive grains, **characterised by** manufacturing a polycrystalline body comprising diamond particles in a matrix of silicon carbide and silicon, the manufacturing of the polycrystalline body comprises the following steps; forming a work piece from diamond particles,
heating the work piece and controlling the heating temperature and heating time so that a certain desired amount of graphite is created by graphitization of diamond particles,
thereby creating an intermediate body, and
infiltrating silicon into the intermediate body, and thereafter
crushing the polycrystalline body into grains.

2. A method according to Claim 1, **characterised by** manufacturing a polycrystalline body comprising 20-70 vol.-% of diamond particles, 0.1-75 vol.-% of silicon carbide and 1-40 vol.-% of silicon, and
crushing the polycrystalline body into grains.

3. A method according to claim 2, **characterised by** the steps of manufacturing a polycrystalline body comprising at least 20 vol.-% of diamond particles, at least 5 vol.-% of silicon carbide, preferably more than 15 vol.-% of silicon carbide, and
silicon, the Young's modulus exceeding 450 GPa, and
crushing the polycrystalline body into grains.

4. A method according to Claim 3, **characterised by** the steps of manufacturing a polycrystalline body comprising at least 29 vol.-% of diamond particles, at least 14 vol.-% of silicon carbide, and silicon, the Young's modulus exceeding 540 GPa, and
crushing the polycrystalline body into grains.

5. A method according to claim 3, **characterised by** the steps of manufacturing a polycrystalline body comprising at least 46 vol.-% diamond particles having sizes of about 30 μm at the most, at least 5 vol.-% of silicon carbide, preferably more than 15 vol.-% of silicon carbide, and silicon, the Young's modulus exceeding 560 GPa, and
crushing the polycrystalline body into grains.

6. A method according to claim 3, **characterised by** the steps of manufacturing a polycrystalline body comprising at least 54 vol.-% of diamond particles, at least 60% of the diamond particles having sizes of at least 50 μm, at least 5 vol.-% of silicon carbide, preferably more than 15 vol.-% of silicon carbide, and silicon, the Young's modules exceeding 650 GPa, and
crushing the polycrystalline body into grains.

7. A method according to any one of Claims 1-6, **characterised by** crushing the polycrystalline body into grains having a size of at least 40 μm.

8. A method according to any one of Claims 1-7, **characterised by** forming the work piece of diamond particles having a size of 3-500 μm.

9. A method according to any one of Claim 1-8, **characterised in that** the amount of graphite created during the heat treatment of the work piece is 1-50 wt-%, preferably 6-30 wt-% of the amount of diamond.

10. A method according to any one of Claims 1-9, **characterised in that** the heating temperature during graphitization is lower than 1700°C.

**11.** A method according to any one claims 1-10, **characterised in that** the heating temperature and heating time needed for the graphitization is empirically determined for the heating equipment used.

**12.** A method according to any one of Claims 1-11, **characterised by** forming the work piece with a porosity of 25-60 vol.-%.

**13.** A method according to any one of Claims 1-12, **characterised by** depositing a certain amount of carbon in the work piece by exposing the work piece to a gaseous hydrocarbon or hydrocarbons at a temperature exceeding the decomposition temperature for the hydrocarbon or hydrocarbons.

**14.** A method according to Claim 13, **characterised in that** at least some graphitization of the diamond particles is done before the work piece is exposed to a gaseous hydrocarbon or hydrocarbons at a temperature exceeding the decomposition temperature for the hydrocarbon or hydrocarbons.

**15.** A method according to any one of Claims 1-14, **characterised in that** the work piece is formed from a homogeneous mixture of diamond particles of various sizes eventually with the addition of a binder.

**16.** A method according to any one of Claims 1-15, **characterised in that** the forming of the work piece is made in a mould, the heat treatment and the infiltration of silicon being made after the work piece has been taken out of the mould.

**17.** Abrasive grains manufactured according to the method of Claim 1, **characterised in that** the grains comprise diamond particles, silicon carbide and silicon, the diamond particles being placed in a matrix of silicon carbide and silicon, the mean value content of diamond particles, silicon carbide and silicon in the grains being 20-70, 0.1-75 and 1-40 vol.-%, respectively.

**18.** Abrasive grains according to Claim 17, **characterised in that** the mean value content of diamond particles, silicon carbide and silicon in the grains being at least 20, at least 5, and 1-40 vol.-%, respectively.

**19.** Abrasive grains according to Claim 17, **characterised in that** the mean value content of diamond particles, silicon carbide and silicon in the grains being at least 29, at least 14, and 1-40 vol.-%, respectively.

**20.** Abrasive grains according to Claim 17, **characterised in that** the mean value content of diamond particles, silicon carbide and silicon in the grains being at least 46, at least 5, and 1-40 vol.%, respectively, the diamond particles having sizes of about 30μm or less.

**21.** Abrasive grains according to Claim 17, **characterised in that** the mean value content of diamond particles, silicon carbide and silicon in the grains being at least 54, at least 5, and 1-40 vol.-%, respectively, at least 60% of the diamond particles having sizes of at least 50 μm.

**22.** Abrasive grains according to any one of Claims 17-21, **characterised in that** the diamond particles in the grains have a size of 3-500 μm.

**23.** Abrasive grains according to any one of Claims 17-21, **characterised in that** the grains have a thermal stability factor less than 1.2, preferably less than 1.1.

**Patentansprüche**

**1.** Ein Verfahren zum Herstellen von Schleifkörnern, **gekennzeichnet durch** das Herstellen eines polykristallinen Körpers, der Diamantpartikel in einer Matrix aus Siliziumcarbid und Silizium umfaßt, das Herstellen des polykristallinen Körpers umfaßt die folgenden Schritte;
Formen eines Werkstückes aus Diamantpartikeln,
Erhitzen des Werkstückes und Kontrollieren der Heiztemperatur und Heizzeit, so daß eine bestimmte, erwünschte Menge an Graphit **durch** Graphitisierung der Diamantpartikeln geschaffen wird, dabei ein Zwischenkörper geschaffen wird, und
Infiltrieren von Silizium in den Zwischenkörper und danach Zerdrücken des polykristallinen Körpers in Körner.

2. Ein Verfahren nach Anspruch 1, **gekennzeichnet durch** das Herstellen eines polykristallinen Körpers 20-70 Vol.-% Diamantpartikel, 0.1-75 Vol.-% Siliziumcarbid und 1-40 Vol.-% Silizium umfaßt, und das Zerdrücken des polykristallinen Körpers in Körner.

3. Ein Verfahren nach Anspruch 2, **gekennzeichnet durch** die Schritte für das Herstellen eines polykristallinen Körpers, der mindestens 20 Vol.-% Diamantpartikel, mindestens 5 Vol.-% Siliziumcarbid, vorzugsweise mehr als 15 Vol.-% Siliziumcarbid und Silizium umfasst, wobei das Young-Modul 450 GPa übersteigt und Zerdrücken des polykristallinen Körpers in Körner.

4. Ein Verfahren nach Anspruch 3, **gekennzeichnet durch** die schritte für das Herstellen eines polykristallinen Körpers, der mindestens 29 Vol.-% Diamantpartikel, mindestens 14 Vol.-% Siliziumcarbid und Silizium umfasst, wobei das Young-Modul 540 GPa übersteigt und Zerdrücken des polykristallinen Körpers in Körner.

5. Ein Verfahren nach Anspruch 3, **gekennzeichnet durch** die Schritte für das Herstellen eines polykristallinen Körpers, der mindestens 46 Von.-% Diamantpartikel mit Größen von etwa höchstens 30 μm, wenigstens 5 Vol.-% Siliziumcarbid, vorzugsweise mehr als 15 Vol.-% Siliziumcarbid und Silizium umfasst, wobei das Young-Modul 560 GPa übersteigt und Zerdrücken des polykristallinen Körpers in Körner.

6. Ein Verfahren nach Anspruch 3, **gekennzeichnet durch** die Schritte für das Herstellen eines polykristallinen Körpers, der mindestens 54 Vol.-% Diamantpartikel, mindestens 60 % der Diamantpartikel haben Größen von wenigstens 50 μm, mindestens 5 Vol.-% Siliziumcarbid, vorzugsweise mehr als 15 Vol.-% Siliziumcarbid und Silizium umfasst, wobei das Young-Modul 650 GPa übersteigt und zerdrücken des polykristallinen Körpers in Körner.

7. Ein Verfahren nach einem der Ansprüche 1-6, **gekennzeichnet durch** das Zerdrücken des polykristallinen Körpers in Körner mit einer Größe von wenigstens 40 μm.

8. Ein Verfahren nach einem der Ansprüche 1-7, **gekennzeichnet durch** das Formen des Werkstückes aus Diamantpartikeln mit einer Größe von 3-500 μm.

9. Ein Verfahren nach einem der Ansprüche 1-8 **dadurch gekennzeichnet, daß** die Menge an während der Wärmebehandlung des Werkstückes geschaffenen Graphits 1-50 Gew.-%, vorzugsweise 6-30 Gew.-% der Menge an Diamant ist.

10. Ein Verfahren nach einem der Ansprüche 1-9 **dadurch gekennzeichnet, daß** die Heiztemperatur während der Graphitisierung niedriger ist als 1700 °C.

11. Ein Verfahren nach einem der Ansprüche 1-10 **dadurch gekennzeichnet, daß** die für die Graphitisierung benötigte Heiztemperatur und Heizzeit empirisch für die verwendete Heizausrüstung bestimmt werden.

12. Ein Verfahren nach einem der Ansprüche 1-11, **gekennzeichnet durch** das Formen eines Werkstückes mit einer Porösität von 25-60 Vol.-%.

13. Ein Verfahren nach einem der Ansprüche 1-12, **gekennzeichnet durch** das Ablagern einer bestimmten Menge Kohlenstoff in dem Werkstück **durch** Aussetzen des Werkstückes einem gasförmigen Kohlenwasserstoff oder gasförmiger Kohlenwasserstoffe bei einer Temperatur, die die Zersetzungstemperatur des Kohlenwasserstoffes oder der Kohlenwasserstoffe übersteigt.

14. Ein Verfahren nach Anspruch 13 **dadurch gekennzeichnet, daß** wenigstens etwas Graphitisierung der Diamantpartikel stattfindet, bevor das Werkstück einem gasförmigen Kohlenwasserstoff oder gasförmigen Kohlenwasserstoffen bei einer Temperatur, die die Zersetzungstemperatur des Kohlenwasserstoffes oder der Kohlenwasserstoffe übersteigt, ausgesetzt wird.

15. Ein Verfahren nach einem der Ansprüche 1-14 **dadurch gekennzeichnet, daß** das Werkstück aus einer homogenen Mischung aus Diamantpartikeln von verschiedener Größe und eventuell mit der Zugabe eines Bindemittels geformt wird.

16. Ein Verfahren nach einem der Ansprüche 1-15 **dadurch gekennzeichnet, daß** das Formen des Werkstückes in einer Form gemacht wird, wobei die Hitzebehandlung und die Infiltration des Siliziums gemacht wird, nachdem das Werkstück der Form entnommen wurde.

**17.** Schleifkörner hergestellt nach dem Verfahren aus Anspruch 1 **dadurch gekennzeichnet, daß** die Körner Diamantpartikel, Siliziumcarbid und Silizium umfassen, wobei die Diamantpartikel in einer Matrix aus Siliziumcarbid und Silizium angeordnet sind, wobei der Mittelwert des Gehaltes an Diamantpartikeln, Siliziumcarbid und Silizium jeweils 20-70, 0.1-75 und 1-40 Vol.-% ist.

**18.** Schleifkörner nach Anspruch 17 **dadurch gekennzeichnet, daß** der Mittelwert des Gehaltes an Diamantpartikeln, Siliziumcarbid und Silizium in den Körnern jeweils wenigstens 20, wenigstens 5 und 1-40 Vol.-% ist.

**19.** Schleifkörner nach Anspruch 17 **dadurch gekennzeichnet, daß** der Mittelwert des Gehaltes an Diamantpartikeln, Siliziumcarbid und Silizium in den Körnern jeweils wenigstens 29, wenigstens 14 und 1-40 vol.-% ist.

**20.** Schleifkörner nach Anspruch 17 **dadurch gekennzeichnet, daß** der Mittelwert des Gehaltes an Diamantpartikeln, Siliziumcarbid und Silizium in den Körnern jeweils wenigstens 46, wenigstens 5 und 1-40 Vol.-% ist, wobei die Diamantpartikel Größen von etwa 30 µm oder weniger haben.

**21.** Schleifkörner nach Anspruch 17 **dadurch gekennzeichnet, daß** der Mittelwert des Gehaltes an Diamantpartikeln, Siliziumcarbid und Silizium in den Körnern jeweils wenigstens 54, wenigstens 5 und 1-40 vol.-% ist, wobei wenigstens 60 % der Diamantpartikel Größen von wenigstens 50 µm haben.

**22.** Schleifkörner nach einem der Ansprüche 17-21 **dadurch gekennzeichnet, daß** die Diamantpartikel in den Körnern eine Größe von 3-500 µm haben.

**23.** Schleifkörner nach einem der Ansprüche 17-21 **dadurch gekennzeichnet, daß** die Körner einen thermischen Stabilitätsfaktor kleiner als 1,2, vorzugsweise kleiner als 1,1, haben.

**Revendications**

**1.** Procédé de production de grains abrasifs, **caractérisé par** la fabrication d'un corps polycristallin comprenant des particules de diamant dans une matrice de carbure de silicium et de silicium, la fabrication du corps polycristallin comprenant les étapes suivantes :

- formation d'une pièce à travailler à partir des particules de diamant,
- chauffage de la pièce à travailler et contrôle de la température de chauffage et du temps de chauffage de manière à ce qu'une certaine quantité souhaitée de graphite soit créée par graphitisation de particules de diamant,
- créant ainsi un corps intermédiaire, et
- infiltration de silicium dans le corps intermédiaire, et ensuite broyage du corps polycristallin en grains.

**2.** Procédé selon la revendication 1, **caractérisé par** la fabrication d'un corps polycristallin comprenant de 20 à 70% en volume de particules de diamant, de 0,1 à 75% en volume de carbure de silicium et de 1 à 40% en volume de silicium, et broyage du corps polycristallin en grains.

**3.** Procédé selon la revendication 2, **caractérisé par** les étapes de fabrication d'un corps polycristallin comprenant au moins 20% en volume de particules de diamant, au moins 5% en volume de carbure de silicium, de préférence plus de 15% en volume de carbure de silicium, et du silicium, le module de Young étant supérieur à 450 GPa, et broyage du corps polycristallin en grains.

**4.** Procédé selon la revendication 3, **caractérisé par** les étapes de fabrication d'un corps polycristallin comprenant au moins 29% en volume de particules de diamant, au moins 14% en volume de carbure de silicium, et du silicium, le module de Young étant supérieur à 540 GPa, et broyage du corps polycristallin en grains.

**5.** Procédé selon la revendication 3, **caractérisé par** les étapes de fabrication d'un corps polycristallin comprenant au moins 46% en volume de particules de diamant ayant des tailles d'environ 30 µm au plus, au moins 5% en volume de carbure de silicium, de préférence plus de 15% en volume de carbure de silicium, et du silicium, le module de Young étant supérieur à 560 GPa, et broyage du corps polycristallin en grains.

**6.** Procédé selon la revendication 3, **caractérisé par** les étapes de fabrication d'un corps polycristallin comprenant au moins 54% en volume de particules de diamant, au moins 60% des particules de diamant ayant des tailles d'au moins 50 µm, au moins 5 % en volume de carbure de silicium, de préférence plus de 15% en volume de carbure de silicium, et du silicium, le module de Young étant supérieur à 650 GPa, et broyage du corps polycristallin en grains.

**7.** Procédé selon l'une quelconque des revendications 1 à 6, **caractérisé par** le broyage du corps polycristallin en grains ayant une taille d'au moins 40 µm.

**8.** Procédé selon l'une quelconque des revendications 1 à 7, **caractérisé par** la mise en forme de la pièce à travailler de particules de diamant ayant une taille de 3 à 500 µm.

**9.** Procédé selon l'une quelconque des revendications 1 à 8, **caractérisé en ce que** la quantité de graphite créée pendant le traitement thermique de la pièce à travailler est comprise entre 1 et 50 % en poids, de préférence entre 6 et 30% en poids de la quantité de diamant.

**10.** Procédé selon l'une quelconque des revendications 1 à 9, **caractérisé en ce que** la température de chauffage pendant la graphitisation est inférieure à 1700°C.

**11.** Procédé selon l'une quelconque des revendications 1 à 10, **caractérisé en ce que** la température de chauffage et le temps de chauffage nécessaire pour la graphitisation sont déterminés empiriquement pour l'équipement de chauffage utilisé.

**12.** Procédé selon l'une quelconque des revendications 1 à 11, **caractérisé par** la mise en forme de la pièce à travailler avec une porosité de 25 à 60% en volume.

**13.** Procédé selon l'une quelconque des revendications 1 à 12, **caractérisé par** le dépôt d'une certaine quantité de carbone dans la pièce à travailler par exposition de la pièce à travailler à un ou des hydrocarbures gazeux à une température supérieure à la température de décomposition du ou des hydrocarbures.

**14.** Procédé selon la revendication 13, **caractérisée en ce qu'**au moins une partie de la graphitisation des particules de diamant est effectuée avant que la pièce à travailler ne soit exposée à un ou des hydrocarbures gazeux à une température supérieure à la température de décomposition du ou des hydrocarbures.

**15.** Procédé selon l'une quelconque des revendications 1 à 14, **caractérisé en ce que** la pièce à travailler est formée à partir d'un mélange homogène de particules de diamant de tailles diverses éventuellement avec l'addition d'un liant.

**16.** Procédé selon l'une quelconque des revendications 1 à 15, **caractérisé en ce que** la formation de la pièce à travailler est effectuée dans un moule, le traitement thermique et l'infiltration du silicium étant effectués après avoir sorti la pièce d'oeuvre du moule.

**17.** Grains abrasifs fabriqués selon le procédé de la revendication 1, **caractérisés en ce que** les grains comprennent des particules de diamant, du carbure de silicium et du silicium, les particules de diamant étant placées dans une matrice de carbure de silicium et de silicium, la valeur moyenne de la teneur en particules de diamant, de carbure de silicium et de silicium dans les grains étant de 20 à 70, de 0,1 à 75 et de 1 à 40% en volume, respectivement.

**18.** Grains abrasifs selon la revendication 17, **caractérisés en ce que** la valeur moyenne de la teneur en particules de diamant, de carbure de silicium et de silicium dans les grains est d'au moins 20, d'au moins 5 et de 1 à 40% en volume, respectivement.

**19.** Grains abrasifs selon la revendication 17, **caractérisés en ce que** la valeur moyenne de la teneur en particules de diamant, de carbure de silicium et de silicium dans les grains est d'au moins 29, d'au moins 14, et de 1 à 40% en volume, respectivement.

**20.** Grains abrasifs selon la revendication 17, **caractérisés en ce que** la valeur moyenne de la teneur en particules de diamant, de carbure de silicium et de silicium dans les grains est d'au moins 46, d'au moins 5 et de 1 à 40% en volume, respectivement, les particules de diamant ayant des tailles d'environ 30 µm ou inférieur.

**21.** Grains abrasifs selon la revendication 17, **caractérisés en ce que** la valeur moyenne de la teneur en particules de diamant, de carbure de silicium et de silicium dans les grains est d'au moins 54, d'au moins 5 et de 1 à 40% en volume, respectivement, au moins 60% des particules de diamant ayant des tailles d'au moins 50 μm.

**22.** Grains abrasifs selon l'une quelconque des revendications 17 à 21, **caractérisés en ce que** les particules de diamant dans les grains ont une taille de 3 à 500 μm.

**23.** Grains abrasifs selon l'une quelconque des revendications 17 à 21, **caractérisés en ce que** les grains ont un facteur de stabilité thermique inférieur à 1,2, de préférence inférieur à 1,1.

FIG.1

FIG.3

FIG.2

FIG.4a

FIG.4b

FIG.4c

FIG.5a

FIG.5b

FIG.5c